# EUROPÄISCHE PATENTSCHRIFT

(11) **EP 2 009 662 B1**
(45) Veröffentlichungstag und Bekanntmachung des Hinweises auf die Patenterteilung: **12.08.2009**
(21) Anmeldenummer: 07012382.3
(22) Anmeldetag: 25.06.2007
(51) Int. Cl.: H01H 25/04, G06F 3/033

(54) **Mehrweg-Kippschalter**
Multi-way rocker switch
Interrupteur basculant à plusieurs voies

(43) Veröffentlichungstag der Anmeldung: 31.12.2008
(73) Patentinhaber: Delphi Technologies, Inc., Troy, Michigan 48007 (US)
(72) Erfinder: Ketelsen, Helge, 31162 Bad Salzdetfurth (DE)
(74) Vertreter: Denton, Michael John

(56) Entgegenhaltungen:
- DE-A1- 19 517 538
- DE-C1- 10 151 603
- JP-A- 2000 268 678

## Beschreibung

Die vorliegende Erfindung betrifft einen Mehrweg-Kippschalter gemäß dem Oberbegriff des Anspruchs 1.

Derartige Mehrweg-Kippschalter kommen in unterschiedlichsten elektronischen Geräten wie beispielsweise Mobiltelefonen, PDAs, (Auto-)Radios oder Navigationssystemen zum Einsatz, um damit einzelne Funktionen des jeweiligen Geräts bedienen oder durch dessen Benutzeroberfläche navigieren zu können. Viele derartiger Mehrweg-Kippschalter sind jedoch nicht diskret, was bedeutet, dass mehrere oder sogar alle Seiten des Schalters gleichzeitig in unerwünschter Weise betätigt werden können, was dazu führen kann, dass gleichzeitig mehrere bewegliche Kontakte die ihnen zugeordneten stationären Kontakte kontaktieren.

Um einer derartigen Mehrfachkontaktierung entgegenzuwirken, wird in der DE 195 17 538 A1 ein Mehrweg-Kippschalter vorgeschlagen, bei dem zusätzlich ein mit Vorsprüngen versehenes Halteelement vorgesehen ist. Die Kontakte dieses Mehrweg-Kippschalters und die Vorsprünge sind dabei in einander abwechselnder Weise in gleichmäßigen Winkelabständen von ca. 45° angeordnet, so dass die Kipptaste bei einer Verkippung mit zwei benachbarten Vorsprüngen in Anlage gelangt. Hierdurch wird sichergestellt, dass lediglich der zwischen den beiden benachbarten Vorsprüngen angeordnete Kontakt geschlossen werden kann. Der in der DE 195 17 538 A1 beschriebene Kippschalter ist jedoch aus einer verhältnismäßig großen Anzahl unterschiedlicher Teile zusammengebaut und ist dementsprechend teuer in der Herstellung.

DE 101 51 603 C1 offenbart einen Merhweg-Kippschalter gemäß dem Oberbegriff des Anspruchs 1.

Darüber hinaus ist dieser Kippschalter mit Verschleißerscheinungen behaftet, welche dadurch entstehen, dass bei jeder Betätigung des Kippschalters dessen Kipptaste mit den genannten Vorsprünge in Reibkontakt gelangt, wodurch die Vorsprünge mit der Zeit abgenützt werden, so dass eine unerwünschte Mehrfachkontaktierung bei diesem Kippschalter auf Dauer nicht ausgeschlossen werden kann.

Der Erfindung liegt die Aufgabe zugrunde, einen Mehrweg-Kippschalter gemäß dem Oberbegriff des Anspruchs 1 dahingehend weiterzuentwickeln, dass eine unerwünschte Mehrfachkontaktierung dauerhaft ausgeschlossen werden kann.

Diese Aufgabe wird mit einem Mehrweg-Kippschalter gelöst, welcher die Merkmale des Anspruchs 1 aufweist. Insbesondere wird die Aufgabe dadurch gelöst, dass der Mehrweg-Kippschalter eine Scharnierplatte mit mehreren sich kreuzenden und parallel zu den Kippachsen der Kipptaste verlaufenden Scharnierachsen umfasst, um die sich die Scharnierplatte bei einer Verkippung der Kipptaste zur Übertragung der Kippbewegung der Kipptaste auf die beweglichen Kontakte verformt. Bei einer Verkippung der Kipptaste um eine erste Kippachse verformt sich dabei die Scharnierplatte derart um eine zugehörige erste Scharnierachse, dass sie eine gleichzeitige Verkippung der Kipptaste um eine die erste Kippachse kreuzende zweite Kippachse sperrt.

Mit anderen Worten wird dadurch, dass sich die Scharnierplatte um die erste Scharnierachse verformt, eine die erste Scharnierachse kreuzende zweite Scharnierachse derart verformt, dass sich die Scharnierplatte nicht mehr um diese zweite Scharnierachse verbiegen lässt. Dies macht es unmöglich, die Kipptaste um eine parallel zu der zweiten Scharnierachse verlaufende zweite Kippachse zu verkippen.

Der Erfindung liegt dabei die Erkenntnis zugrunde, dass, wenn die Scharnierplatte durch Verkippung der Kipptaste um eine erste Kippachse um eine zugehörige erste Scharnierachse gezielt verformt wurde, es dann unmöglich ist, die Kipptaste gleichzeitig um eine die erste Kippachse kreuzende zweite Kippachse zu verkippen, da eine derartige Verkippung durch die um die erste Scharnierachse verformte Scharnierplatte verhindert wird.

So unterteilen sich nämlich die sich kreuzenden Scharnierachsen gegenseitig in mehrere Scharnierachsenabschnitte, so dass sich die Scharnierachsenabschnitte der die erste Scharnierachse kreuzenden Scharnierachsen schneiden, wenn die Scharnierplatte bei der Verkippung der Kipptaste um die erste Kippachse um die zugehörige erste Scharnierachse verformt wurde. Dadurch, dass sich jedoch im verformten Zustand die Scharnierachsenabschnitte der die erste Scharnierachse kreuzenden Scharnierachsen schneiden, ist es unmöglich, die Scharnierplatte um diese Scharnierachsenabschnitte zu verformen, wodurch einer unerwünschten Mehrfachkontaktierung des Mehrweg-Kippschalters zuverlässig entgegengewirkt werden kann.

Gemäß einer bevorzugten Ausführungsform kann der erfindungsgemäße Mehrweg-Kippschalter als Vierweg-Kippschalter ausgebildet sein, was bedeutet, dass die Leiterplatte vier rautenförmig angeordnete, insbesondere die Eckpunkte eines Quadrats definierende stationäre Kontakte aufweist. In entsprechender Weise sind in diesem Falle vier bewegliche Kontakte vorhanden, welche ebenfalls rautenförmig bzw. quadratisch angeordnet sind. Im Falle, dass der Mehrweg-Kippschalter als Vierweg-Kippschalter ausgebildet ist, weist die Scharnierplatte zumindest zwei senkrecht zueinander stehende Scharnierachsen auf, so dass die Kipptaste in entsprechender Weise um zwei senkrecht zueinander stehende Kippachsen gezielt kippbar ist. Die Kipp- und Scharnierachsen verlaufen dabei parallel zu den Diagonalen der genannten Rauten bzw. Quadrate, so dass bei einer Verkippung der Kipptaste um eine Kippachse eine gezielte Kontaktierung jener Kontakte erzielt wird, welche auf der jeweils anderen Diagonalen liegen.

Zwar kann es ausreichen, dass die Scharnierplatte lediglich zwei sich senkrecht kreuzende Scharnierachsen aufweist, jedoch kann es sich als vorteilhaft erweisen, die Scharnierplatte mit vier Scharnierachsen auszubilden, welche derart orientiert sind, dass die Scharnierplatte in neun Bereiche unterteilt wird. Mit anderen Worten weist die Scharnierplatte bei dieser Ausführungsform zwei Paare paralleler Scharnierachsen auf, wobei das eine Paar das andere Paar senkrecht kreuzt. Auf diese Weise wird die Scharnierplatte in drei mal drei, also neun Bereiche unterteilt. Diese Ausgestaltung erweist sich dahingehend als vorteilhaft, dass dadurch der in der Mitte der drei mal drei Bereiche liegende Bereich zu Befestigungszwecken der Scharnierplatte verwendet werden kann, da in diesem Falle lediglich die acht Randbereiche einer Verformung unterworfen werden.

Um die Scharnierplatte möglichst kostengünstig herstellen zu können und um die Teilezahl des Mehrweg-Kippschalters gering zu halten, kann die Scharnierplatte einstückig aus einem dauerhaft elastischen Kunststoffmaterial gefertigt sein, wobei die Scharnierachsen durch Filmscharniere gebildet werden, welche die benachbarten Bereiche der Scharnierplatte flexibel und beweglich miteinander verbinden. Anstelle mehrere einzelne Scharnierplattenbereiche vorzusehen, welche über mechanische Scharniere verbunden sind, ist die Scharnierplatte somit als ein einziges, einstückiges Teil ausgeführt, welches sich beispielsweise mittels eines Spritzgießverfahrens kostengünstig herstellen lässt. Dadurch, dass die Scharnierplatte aus einem dauerhaft elastischen Material gefertigt ist, kommt es entlang der durch die Filmscharniere gebildeten Scharnierachsen zu keinen mechanischen Verschleißerscheinungen, wodurch mit dem erfindungsgemäßen Mehrweg-Kippschalter die Gefahr einer Mehrfachkontaktierung dauerhaft ausgeschlossen werden kann.

Anstelle die Scharnierplatte aus einem Kunststoffmaterial zu fertigen, kann die Scharnierplatte auch aus einem dauerhaft elastischen Metall, insbesondere Federstahl, gefertigt sein, in das die Scharnierachsen eingeprägt sind.

Gemäß einer weiteren Ausführungsform kann der Mehrweg-Kippschalter ferner einen an der Leiterplatte befestigten Haltekörper umfassen, an dem die Scharnierplatte befestigt ist. Darüber hinaus kann die Kipptaste an dem Haltekörper beispielsweise über ein Kugelgelenk gelagert sein.

Da die Kipptaste des Mehrweg-Kippschalters mit Markierungen versehen sein kann, welche die gewünschten Kipprichtungen des Schalters angeben, ist es unerwünscht, dass die Kipptaste sich verdreht, da dann die Markierungen in falsche Richtungen zeigen würden. Um einer derartigen Drehung bzw. Rotation der Kipptaste entgegenzuwirken, können der Haltekörper sowie die Kipptaste derart aufeinander abgestimmte Eingriffsabschnitte aufweisen, dass sie miteinander in Eingriff stehen, gleichzeitig jedoch eine Verkippung der Kipptaste um dessen Kippachsen zulassen.

Zugunsten einer kompakten Bauform des Mehrweg-Kippschalters kann der Haltekörper aus einem oberen Teil und einem unteren Teil zusammengesetzt sein, wobei zwischen den beiden Teilen die Scharnierplatte angeordnet ist. Die Einheit aus Haltekörper und Scharnierplatte kann dadurch bereits vor der eigentlichen Montage des Mehrweg-Kippschalters vormontiert werden, wodurch die eigentliche Montage des Mehrweg-Kippschalters zeitsparender durchgeführt werden kann.

Da bei der Ausführungsform mit einem Haltekörper die Scharnierplatte vorzugsweise von diesem aufgenommen wird und somit die Verformung der Scharnierplatte nicht direkt auf die beweglichen Kontakte übertragen werden kann, sind ferner den einzelnen Kontakten zugeordnete Übertragungselemente vorgesehen, welche die Verformung der Scharnierplatte infolge einer Verkippung der Kipptaste auf die beweglichen Kontakte übertragen.

Da die Übertragungselemente dabei eine translatorische Bewegung ausführen, kann der Haltekörper eine Vielzahl an Führungen, insbesondere vier Führungen, aufweisen, welche jeweils ein Übertragungselement gleitend aufnehmen. Die Übertragungselemente stehen dabei in Kontakt mit der Unterseite der Scharnierplatte, so dass eine durch eine Verkippung der Kipptaste hervorgerufene Verformung der Scharnierplatte auf einen zugehörigen beweglichen Kontakt übertragen wird.

Da es wünschenswert sein kann, die Kipptaste zu hinterleuchten, um beispielsweise deren Markierungen bei ungünstigen Lichtverhältnissen deutlicher in Erscheinung treten zu lassen, können die Übertragungselemente Durchbrechungen aufweisen, welche mit entsprechenden Durchbrechungen in dem Haltekörper und in der Scharnierplatte fluchten. Auf diese Weise lässt sich die Kipptaste mittels zumindest einer auf der Leiterplatte angeordneten Lichtquelle hinterleuchten, ohne die Kipptaste selbst mit entsprechenden Leuchtmitteln ausstatten zu müssen.

Die einzelnen Übertragungselemente können über elastische Federarme untereinander verbunden sein, welche beispielsweise eine spiralförmige Gestalt aufweisen können, um sich zumindest teilweise um die Übertragungselemente herum zu winden. Durch die Verbindung der Übertragungselemente über die genannten Federarme lassen sich die Übertragungselemente schneller montieren, da nicht jedes Übertragungselement einzeln eingebaut werden muss. Die Federarme behindern die Verschiebbarkeit der Übertragungselemente nicht, da sie zum einen wie die Übertragungselemente aus einem elastischen Kunststoffmaterial gefertigt sind und da zum anderen deren Elastizität durch deren spiralförmige Gestalt unterstützt wird.

Im Folgenden wird die Erfindung rein beispielhaft anhand einer exemplarischen Ausführungsform unter Bezugnahme auf die beigefügten Zeichnungen beschrieben, wobei:
- Fig. 1: eine Explosionsdarstellung eines Mehrweg-Kippschalters zeigt;
- Fig. 2: eine perspektivische Ansicht der Kipptaste, des Haltekörpers, der Scharnierplatte und der Übertragungselemente in Explosionsdarstellung zeigt; und
- Fig. 3: einen Vertikalschnitt durch die Elemente der Fig. 2 im zusammengebauten Zustand zeigt.

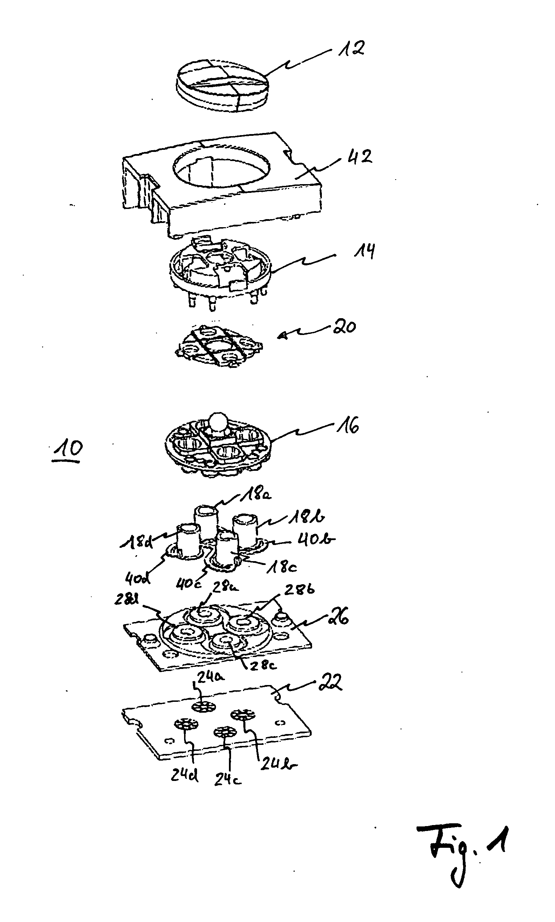

Unter Bezugnahme auf die Explosionsdarstellung der Fig. 1 werden zunächst die einzelnen Bauteile einer Ausführungsform eines Mehrweg-Kippschalters 10 erläutert. Der dargestellte Mehrweg-Kippschalter 10 weist von oben nach unten betrachtet eine kreisrunde Kipptaste 12, ein Gehäuse 42 mit einer kreisrunden Öffnung zur Aufnahme der Kipptaste 12, ein oberes Haltekörperteil 14, eine Scharnierplatte 20, ein unteres Haltekörperteil 16, vier durch Federarme 40a, 40b, 40c, 40d verbundene Übertragungselemente 18a, 18b, 18c, 18d, eine elastische Schaltmatte 26 sowie eine Leiterplatte 22 auf.

Die Leiterplatte 22 weist vier stationäre Kontakte 24a, 24b, 24c, 24d auf, welche in einem gleichmäßigen Winkelabstand von ca. 90° um einen dem Mittelpunkt der Kipptaste 12 entsprechenden Punkt herum angeordnet sind. In entsprechender Weise sind an der elastische Schaltmatte 26 vier nach oben offene, elastische Erhebungen 28a, 28b, 28c, 28d ausgebildet, welche an der Innenseite ihrer oberen Endflächen hier nicht dargestellte bewegliche, kreisrunde Kontaktelemente umfassen, welche den stationären Kontakten 24a, 24b, 24c, 24d der Leiterplatte 22 jeweils beabstandet gegenüberliegen. Wenn eines der auf der Innenseite der elastischen Erhebungen 28a, 28b, 28c, 28d befindlichen Kontaktelemente in Kontakt mit einem der stationären Kontakte 24a, 24b, 24c, 24d gelangt, wird in der erwünschten Weise ein vorbestimmtes elektrisches Signal abgegeben. Hierzu sind die elastischen Erhebungen 28a, 28b, 28c, 28d in vertikaler Richtung reversibel verformbar und derart ausgebildet, dass sie bei Überschreiten einer vorbestimmten Druckkraft einknicken, um ein für eine Bedienperson wahrnehmbares Schaltgefühl erzeugen.

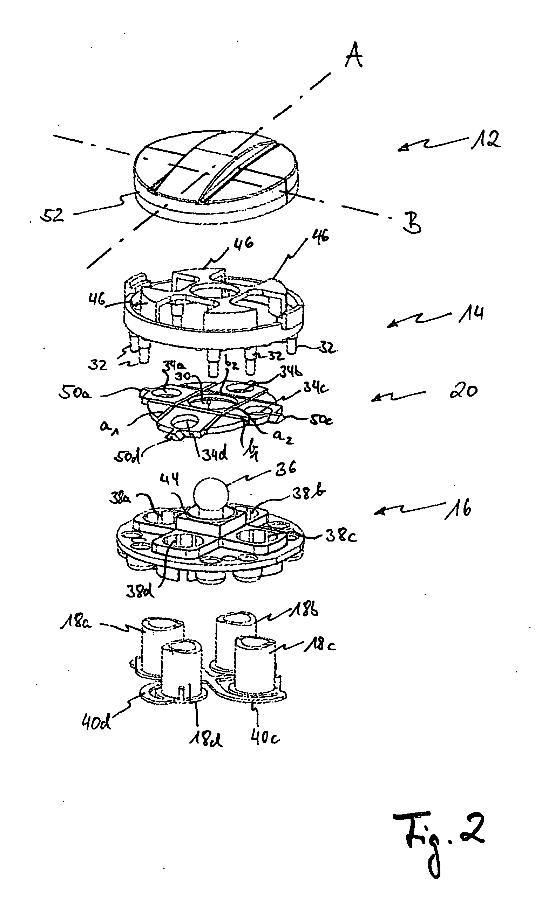

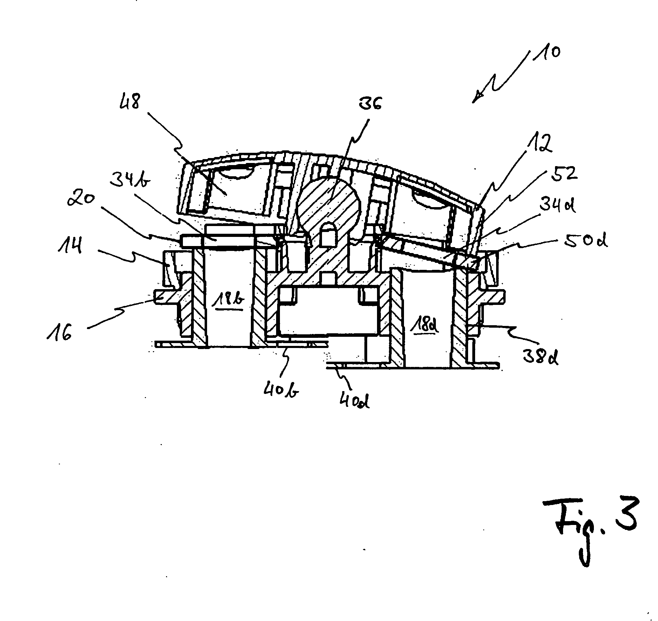

Um die erforderliche Druckkraft zum Einknicken der Übertragungselemente 18a, 18b, 18c, 18d und zum Schließen der Kontakte 24a, 24b, 24c, 24d aufbringen zu können, dient die Kipptaste 12, welche aus der kreisrunden Öffnung des Gehäuses 42 teilweise herausragt, um von einer Bedienperson betätigt zu werden. Wie insbesondere der Fig. 3 entnommen werden kann, ist dabei die Kipptaste 12 über ein Kugelgelenk 36 an dem oberen Haltekörperteil 14 gelenkig gelagert, welches seinerseits mit einer Vielzahl an Zapfen 32 (Fig. 2) an der Leiterplatte 22 (Fig. 1) befestigt ist. Die Zapfen 32 ragen dabei durch entsprechende Öffnungen in dem unteren Haltekörper 16 hindurch, welcher seinerseits einen nach oben stehenden Kugelkörper zur Herstellung der genannten Gelenkverbindung 36 mit der Kipptaste 12 aufweist.

Das untere Halteteil 16 weist ferner vier rohrförmige Führungsöffnungen 38a, 38b, 38c, 38d auf, welche in einem gleichmäßigen Winkelabstand von ca. 90° um einen dem Mittelpunkt der Kipptaste 12 entsprechenden Punkt herum angeordnet sind. Die Führungsöffnungen 38a, 38b, 38c, 38d nehmen dabei die Übertragungselemente 18a, 18b, 18c, 18d auf, so dass diese in den Führungsöffnungen 38a, 38b, 38c, 38d gleitend gelagert sind, um durch eine Verkippung der Kipptaste 12 eine Druckkraft über die Übertragungselemente 18a, 18b, 18c, 18d auf die Erhebungen 28a, 28b, 28c, 28d aufbringen zu können. Wie der Fig. 3 entnommen werden kann, ragen die Übertragungselemente 18a, 18b, 18c, 18d im Ausgangszustand des Kippschalters 10 teilweise aus den Führungsöffnungen 38, 38a, 38b, 38c, 38d an deren Oberseite heraus, so dass die mittleren Randbereiche der Scharnierplatte 20 darauf aufliegen.

Durch die gelenkige Lagerung der Kipptaste 12 über das Kugelgelenk 36 an dem Haltekörper 14, 16 bestünde grundsätzlich die Möglichkeit, die Kipptaste 12 in solch eine Richtung zu neigen, dass nicht nur ein Kontakt sondern beispielsweise zwei benachbarte Kontakte 24b, 24c geschlossen werden. Eine derartige, in aller Regel unerwünschte Mehrfachkontaktierung würde, sofern keine entsprechenden Maßnahmen getroffen werden, stattfinden, wenn die Kipptaste 12 um eine Achse verkippt wird, welche schräg zu den Sollkippachsen A, B (siehe Fig. 2) verläuft.

Um einer derartigen Mehrfachkontaktierung entgegenzuwirken, weist der Mehrwegkippschalter 10 daher die Scharnierplatte 20 auf, welche zwei Paare paralleler Scharnierachsen a₁, a₂, b₁, b₂ aufweist, wobei das eine Paar a₁, a₂ das andere Paar b₁, b₂ senkrecht kreuzt. Die Scharnierachsen a₁, a₂ der Scharnierplatte 20 verlaufen dabei parallel zu der Kippachse A der Kipptaste 12 und die Scharnierachsen b₁, b₂ verlaufen in entsprechender Weise parallel zu der Kippachse B der Kipptaste 12. Durch diese Anordnung der Scharnierachsen a₁, a₂, b₁, b₂ wird die Scharnierplatte 20 in drei mal drei, also neun Bereiche unterteilt.

Bei der Scharnierplatte 20 kann es sich beispielsweise um eine aus einem elastischen Kunststoffmaterial gefertigte, annähernd runde Scheibe handeln, bei der die Scharnierachsen a₁, a₂, b₁, b₂ durch Filmscharniere gebildet werden. Ebenfalls wäre es jedoch auch möglich, die Scharnierplatte 20 aus einem Federstahl zu fertigen und die Scharnierachsen a₁, a₂, b₁, b₂ darin einzuprägen.

Zur Befestigung der Scharnierplatte 20 an dem unteren Haltekörperteil 16 weist die Scharnierplatte 20 in der Mitte eine Öffnung 30 auf, um von einem entsprechenden kreisrunden Sitz 44 an dem unteren Haltekörperteil 16 aufgenommen zu werden.

Wie im Folgenden genauer erläutert wird, dient die Scharnierplatte 20 dazu, dass beispielsweise im Falle einer Verkippung der Kipptaste 12 um die Kippachse B eine gleichzeitige Verkippung der Kipptaste 12 um die Kippachse A gesperrt wird. Die ist darauf zurückzuführen, dass bei einer Verkippung der Kipptaste 12 um die Kippachse B sich die Scharnierplatte 20 um die Scharnierachse b1 derart verformt, dass sie nicht gleichzeitig um eine der Scharnierachsen a₁, a₂ gebogen werden kann.

Wenn nun beispielsweise die Kipptaste 12 um die Achse B verkippt wird, wie dies in den Fig. 2 und 3 dargestellt ist, so führt dies dazu, dass die drei zu der Scharnierachse b1 benachbarten Randbereiche der Scharnierplatte 20 nach unten gebogen bzw. gekippt werden. Hierdurch wird gleichzeitig das Übertragungselement 18d translatorisch nach unten verschoben, so dass letztendlich die Erhebung 28d einknickt, was zu einer Kontaktierung des stationären Kontakts 24d auf der Leiterplatte 22 führt. Dadurch, dass die drei zu der Scharnierachse b 1 benachbarten Randbereiche der Scharnierplatte 20 nach unten gebogen wurden, befinden sich die beiderseits der Scharnierachse b1 befindlichen Scharnierachsenabschnitte der Scharnierachsen a₁ und a₂ nicht mehr auf einer Geraden, wodurch verhindert wird, dass sich die Kipptaste 12 gewissermaßen "über Eck" verkippen lässt. Mit anderen Worten wird durch die Scharnierplatte 20 sichergestellt, dass sich die Kipptaste 12 ausschließlich in zwei senkrecht zueinander stehende Richtungen verkippen lässt.

Um einer unerwünschten Rotation der Kipptaste 12 um eine zu den Kippachsen A, B senkrecht stehende Achse entgegenzuwirken, sind auf der Oberseite des oberen Haltekörperteils 14 vier gleichmäßig beabstandete Vorsprünge 46 vorgesehen, welche mit entsprechenden Eingriffsabschnitten 48 an der Unterseite der Kipptaste 12 (Fig. 3) in Eingriff stehen. Durch diesen Eingriff wird eine unerwünschte Rotation der Kipptaste 12 verhindert, so dass deren (nicht dargestellte) Kippmarkierungen stets korrekt ausgerichtet sind.

Da durch die nach oben stehenden Vorsprünge 46 an der Oberseite des oberen Haltekörperteils 14 eine direkte Kontaktierung der mittleren Randbereiche der Scharnierplatte 20 durch die Kipptaste 12 behindert wird, weist die Kipptaste 12 eine nach unten gerichtete Zylinderwand 52 auf und die mittleren Randbereiche der Kipptaste 12 sind mit radial auskragenden Betätigungsvorsprünge 50a, 50b, 50c, 50d versehen, welche sich zwischen den Vorsprüngen 46 in radialer Richtung weiter als die Vorsprünge 46 nach außen erstrecken. Bei einer Verkippung der Kipptaste 12 kollidiert somit die Zylinderwand 52 der Kipptaste 12 nicht mit den Vorsprüngen 46 sondern gelangt vielmehr mit einem der Betätigungsvorsprünge 50a, 50b, 50c, 50d in Anlage, wodurch die gewünschte Verformung der Scharnierplatte 20 hervorgerufen werden kann.

Da es wünschenswert sein kann, die Kipptaste 12 und insbesondere deren Kippmarkierungen (nicht dargestellt) mit Hilfe von auf der Leiterplatte 22 befindlichen Lichtquellen, beispielsweise LEDs, zu hinterleuchten, ist der erfindungsgemäße Mehrweg-Kippschalter 10 derart ausgestaltet, dass definierte Lichtdurchtrittswege zwischen den auf der Leiterplatte 22 befindlichen Lichtquellen (nicht dargestellt) und der Kipptaste 12 erzeugt werden. Hierzu sind die auf der elastischen Schaltmatte 26 befindlichen Erhebungen 28a, 28b, 28c, 28d an ihrer oberen Endfläche in gleicher Weise wie die mittleren Randbereiche der Scharnierplatte 20 mit Durchbrechungen 34a, 34b, 34d versehen, so dass Lichtstrahlen, welche von auf der Leiterplatte 22 befindlichen Lichtquellen ausgesendet werden, durch die Erhebungen 28a, 28b, 28c, 28d sowie die rohrförmigen Übertragungselemente 18a, 18b, 18c, 18d und die Scharnierplatte 20 bis hin zu der Kipptaste 12 gelangen können, um deren Kippmarkierungen (nicht dargestellt) zu hinterleuchten.

In der dargestellten Ausführungsform ist die Scharnierplatte 20 zwischen der Kipptaste 12 und den Übertragungselementen 18a, 18b, 18c, 18d angeordnet. Tatsächlich ist aber die Positionierung der Scharnierplatte 20 unkritisch. Grundsätzlich kann die Scharnierplatte 20 nämlich an einer beliebigen Stelle im Wirkpfad zwischen der Kipptaste 12 und den Kontakten des Mehrweg-Kippschalters 10 wie beispielsweise zwischen den Übertragungselementen 18a, 18b, 18c, 18d und der elastischen Schaltmatte 26 angeordnet sein.

Der Vollständigkeit halber sei abschließend erwähnt, dass der in den Figuren dargestellte Mehrweg-Kippschalter 10 anstelle einer Scharnierplatte 20, welche zwei Paare sich senkrecht kreuzender Scharnierachsen a₁, a₂; b₁, b₂ aufweist, auch mit einer Scharnierplatte ausgestattet sein kann, welche lediglich zwei sich senkrecht kreuzende Scharnierachsen aufweist. In diesem Falle würde die Scharnierplatte in vier gleich große Bereiche unterteilt werden, wobei die Scharnierachsen gleichermaßen parallel zu den Kippachsen A, B der Kipptaste 12 verlaufen und von den Durchbrechungen 34a, 34b, 34c, 34d unterbrochen werden.

### Bezugszeichenliste

- 10: Mehrweg-Kippschalter
- 12: Kipptaste
- 14: oberes Haltekörperteil
- 16: unteres Haltekörperteil
- 18a, 18b, 18c, 18d: Übertragungselemente
- 20: Scharnierplatte
- 22: Leiterplatte
- 24a, 24b, 24c, 24d: stationäre Kontakte
- 26: elastische Schaltmatte
- 28a, 28b, 28c, 28d: Erhebungen auf 26
- 30: Öffnung in 20
- 32: Zapfen
- 34a, 34b, 34c, 34d: Durchbrechungen
- 36: Kugelgelenk
- 38a, 38b, 38c, 38d: Führungsöffnungen
- 40a, 40b, 40c, 40d: Federarme
- 42: Gehäuse
- 44: Sitz
- 46: Vorsprünge
- 48: Eingriffsabschnitte
- 50a, 50b, 50c, 50d: Betätigungsvorsprünge
- 52: Zylinderwand

- A, B: Kippachsen
- a₁, a₂, b₁, b₂: Scharnierachsen

## Patentansprüche

1. Mehrweg-Kippschalter (10) mit
- einer Leiterplatte (22), auf der eine Vielzahl stationärer Kontakte (24a, 24b, 24c, 24d) vorgesehen ist;
- einer elastischen Schaltmatte (26) mit einer ebenso großen Vielzahl beweglicher Kontakte, welche über den stationärer Kontakten (24a, 24b, 24c, 24d) platziert sind;
- einer an der Leiterplatte (22) zumindest mittelbar gelagerten Kipptaste (12), welche sich um mehrere sich kreuzende Kippachsen (A, B) kippen lässt, wodurch ein beweglicher Kontakt einen ihm zugeordneten stationären Kontakt (24a, 24b, 24c, 24d) kontaktiert; wobei
der Mehrweg-Kippschalter (10) ferner eine Scharnierplatte (20) mit mehreren sich kreuzenden und parallel zu den Kippachsen (A, B) der Kipptaste (12) verlaufenden Scharnierachsen (a₁, a₂, b₁, b₂) umfasst, um die sich die Scharnierplatte (20) bei einer Verkippung der Kipptaste (12) zur Übertragung der Kippbewegung der Kipptaste (12) auf die beweglichen Kontakte (24a, 24b, 24c, 24d) verformt, **dadurch gekennzeichnet, dass** bei einer Verkippung der Kipptaste (12) um eine erste Kippachse (A, B) sich die Scharnierplatte (20) um eine zugehörige erste Scharnierachse (a₁, a₂, b₁, b₂) derart verformt, dass sie eine gleichzeitige Verkippung der Kipptaste (12) um eine die erste Kippachse (A, B) kreuzende zweite Kippachse (B, A) sperrt.

2. Mehrweg-Kippschalter nach Anspruch 1,
**dadurch gekennzeichnet, dass**
die sich kreuzenden Scharnierachsen (a₁, a₂, b₁, b₂) sich gegenseitig in mehrere Scharnierachsenabschnitte unterteilen, wobei sich die Scharnierplatte (20) bei der Verkippung der Kipptaste (12) um die erste Kippachse (A, B) derart um die zugehörige erste Scharnierachse (a₁, a₂, b₁, b₂) verformt, dass die Scharnierachsenabschnitte der die erste Scharnierachse (a₁, a₂, b₁, b₂) kreuzenden Scharnierachsen (b₁, b₂, a₁, a₂,) einen Winkel einschließen.

3. Mehrweg-Kippschalter nach Anspruch 1 oder 2,
**dadurch gekennzeichnet, dass**
der Mehrweg-Kippschalter (10) als Vierweg-Kippschalter ausgebildet ist, wobei:
- die Leiterplatte (22) vier rautenförmig angeordnete stationäre Kontakte (24a, 24b, 24c, 24d) aufweist;
- die beweglichen Kontakte der Schaltmatte (26) ebenfalls rautenförmig angeordnet sind;
- die Kipptaste (12) um zwei senkrecht zueinander stehende Kippachsen (A, B) kippbar ist; und
- die Scharnierplatte (20) zumindest zwei senkrecht zueinander stehende Scharnierachsen (a₁, a₂, b₁, b₂) aufweist.

4. Mehrweg-Kippschalter nach zumindest einem der vorstehenden Ansprüche,
**dadurch gekennzeichnet, dass**
die Scharnierplatte (20) vier Scharnierachsen (a₁, a₂, b₁, b₂) aufweist, welche derart orientiert sind, dass die Scharnierplatte (20) in neun Bereiche unterteilt ist.

5. Mehrweg-Kippschalter nach zumindest einem der vorstehenden Ansprüche,
**dadurch gekennzeichnet, dass**
die Scharnierplatte (20) zwei Paare paralleler Scharnierachsen (a₁, a₂; b₁, b₂) aufweist, wobei das eine Paar (a₁, a₂; b₁, b₂) das andere Paar (b₁, b₂,a₁, a₂) senkrecht kreuzt.

6. Mehrweg-Kippschalter nach zumindest einem der vorstehenden Ansprüche,
**dadurch gekennzeichnet, dass**
die Scharnierplatte (20) aus einem Kunststoffmaterial gefertigt ist und die Scharnierachsen (a₁, a₂, b₁, b₂) durch Filmscharniere gebildet sind.

7. Mehrweg-Kippschalter nach zumindest einem der vorstehenden Ansprüche,
**dadurch gekennzeichnet, dass**
die Scharnierplatte (20) aus einem dauerhaft elastischen Metall, insbesondere Federstahl, gefertigt ist, in das die Scharnierachsen (a₁, a₂, b₁, b₂) eingeprägt sind.

8. Mehrweg-Kippschalter nach zumindest einem der vorstehenden Ansprüche,
**dadurch gekennzeichnet, dass**
der Mehrweg-Kippschalter (10) ferner einen an der Leiterplatte (22) befestigten Haltekörper (14, 16) umfasst, der die Scharnierplatte (20) aufnimmt und an dem die Kipptaste (12) über ein Kugelgelenk (36) gelagert ist.

9. Mehrweg-Kippschalter nach Anspruch 8,
**dadurch gekennzeichnet, dass**
der Haltekörper (14, 16) und die Kipptaste (12) Eingriffsabschnitte (46, 48) aufweisen, welche miteinander in Eingriff stehen, um einer Rotation der Kipptaste (12) entgegenzuwirken.

10. Mehrweg-Kippschalter nach Anspruch 8 oder 9,
**dadurch gekennzeichnet, dass**
der Haltekörper (14, 16) aus einem oberen Teil (14) und einem unteren Teil (16) zusammengesetzt ist, zwischen denen die Scharnierplatte (20) angeordnet ist.

11. Mehrweg-Kippschalter nach zumindest einem der Ansprüche 8 bis 10,
**dadurch gekennzeichnet, dass**
der Haltekörper (14, 16) eine Vielzahl an Führungen (38a, 38b, 38c, 38d), insbesondere vier Führungen (38a, 38b, 38c, 38d), aufweist, welche jeweils ein Übertragungselement (18a, 18b, 18c, 18d) gleitend aufnehmen, über die eine durch eine Verkippung der Kipptaste (12) hervorgerufene Verformung der Scharnierplatte (20) auf einen zugehörigen beweglichen Kontakt übertragen wird.

12. Mehrweg-Kippschalter nach Anspruch 11,
**dadurch gekennzeichnet, dass**
die Übertragungselemente (18a, 18b, 18c, 18d) Durchbrechungen aufweisen, welche mit Durchbrechungen (34a, 34b, 34c, 34d) in dem Haltekörper (14, 16) und in der Scharnierplatte (20) fluchten, um eine Hinterleuchtung der Kipptaste (12) mittels einer auf der Leiterplatte (22) angeordneten Lichtquelle zu ermöglichen.

13. Mehrweg-Kippschalter nach Anspruch 11 oder 12,
**dadurch gekennzeichnet, dass**
die Übertragungselemente (18a, 18b, 18c, 18d) über elastische Federarme (40a, 40b, 40c, 40d), welche vorzugsweise spiralförmig gewunden sind, miteinander verbunden sind.

## Claims

1. Multi-way rocker switch (10) comprising:
a printed circuit board (22) provided with a plurality of stationary contacts (24a, 24b, 24c, 24d);
an elastic switching mat (26) with a likewise large number of movable contacts, placed above the stationary contacts (24a, 24b, 24c, 24d);
a rocker switch (12) supported at least indirectly by the circuit board (22), which can be flipped over with respect to several intersecting tilting axes (A, B), whereby a movable contact contacts an associated stationary contact (24a, 24b, 24c, 24d); wherein
the multi-way rocker switch (10) further includes a hinge plate (20) with several hinge axes (a₁, a₂, b₁, b₂), intersecting and running parallel to the tilting axes (A, B) of the rocker switch (12), about which the hinge plate (20) is deformed during tilting of the rocker switch (12) for transmission of the tilting movement of the rocker switch (12) onto the movable contacts (24a, 24b, 24c, 24d), **characterized in that** during tilting of the rocker switch (12) about a first tilting axis (A, B) the hinge plate (20) is deformed about an associated first hinge axis (a₁, a₂, b₁, b₂) such that it blocks a simultaneous tilting of the rocker switch (12) about a second tilting axis (B, A) intersecting the first tilting axis (A, B).

2. Multi-way rocker switch according to claim 1,
**characterized in that**
the intersecting hinge axes (a₁, a₂, b₁, b₂) divide themselves into several hinge axis sections, wherein the hinge plate (20) during tilting of the rocker switch (12) about the first tilting axis (A, B) is deformed about the associated first hinge axis (a₁, a₂, b₁, b₂) such that the hinge axis sections of the hinge axes (b₁, b₂, a₁, a₂,) intersecting the first hinge axis (a₁, a₂, b₁, b₂) include an angle.

3. Multi-way rocker switch according to claim 1 or 2,
**characterized in that**
the multi-way rocker switch (10) is formed as a four-way rocker switch, wherein:
the circuit board (22) comprises four rhombically arranged stationary contacts (24a, 24b, 24c, 24d);
the movable contacts of the switching mat (26) likewise are arranged rhombically;
the rocker switch (12) is tiltable about two tilting axes (A, B) perpendicular to each other; and
the hinge plate (20) comprises at least two hinge axes (a₁, a₂, b₁, b₂) perpendicular to each other.

4. Multi-way rocker switch according to at least one of the previous claims,
**characterized in that**
the hinge plate (20) comprises four hinge axes (a₁, a₂, b₁, b₂), which are oriented such that the hinge plate (20) is divided into nine areas.

5. Multi-way rocker switch according to at least one of the previous claims,
**characterized in that**
the hinge plate (20) comprises two pairs of parallel hinge axes (a₁, a₂; b₁, b₂), wherein one pair (a₁, a₂; b₁, b₂) perpendicularly intersects the other pair (b₁, b₂, a₁, a₂).

6. Multi-way rocker switch according to at least one of the previous claims,
**characterized in that**
the hinge plate (20) is made of a plastic material and the hinge axes (a₁, a₂, b₁, b₂) are formed by film hinges.

7. Multi-way rocker switch according to at least one of the previous claims,
**characterized in that**
the hinge plate (20) is made of a durable elastic metal, in particular spring steel, into which the hinge axes (a₁, a₂, b₁, b₂) are embossed.

8. Multi-way rocker switch according to at least one of the previous claims,
**characterized in that**
the multi-way rocker switch (10) further includes a support body (14, 16) attached to the circuit board (22) and holding the hinge plate (20) and whereat the rocker switch (12) is carried via a ball joint (36).

9. Multi-way rocker switch according to claim 8,
**characterized in that**
the support body (14, 16) and the rocker switch (12) comprise engaging portions (46, 48), which are engaged to act against a rotation of the rocker switch (12).

10. Multi-way rocker switch according to claim 8 or 9,
**characterized in that**
the support body (14, 16) is composed of an upper part (14) and a lower part (16) between which the hinge plate (20) is arranged.

11. Multi-way rocker switch according to least one of the claims 8 to 10,
**characterized in that**
the support body (14, 16) comprises a plurality of guides (38a, 38b, 38c, 38d), in particular four guides (38a, 38b, 38c, 38d), each slidably holding a transmission element (18a, 18b, 18c, 18d), through which a deformation of the hinge plate (20), caused by tilting of the rocker switch (12), is transmitted to an associated movable contact.

12. Multi-way rocker switch according to claim 11,
**characterized in that**
the transmission elements (18a, 18b, 18c, 18d) comprise openings, which are aligned with openings (34a, 34b, 34c, 34d) in the support body (14, 16) and the hinge plate (20), to enable backlighting of the rocker switch (12) by means of a light source arranged on the circuit board (22).

13. Multi-way rocker switch according to claim 11 or 12,
**characterized in that**
the transmission elements (18a, 18b, 18c, 18d) are interconnected via elastic spring arms (40a, 40b, 40c, 40d), preferably spirally wound.

## Revendications

1. Commutateur basculant à plusieurs voies (10) comprenant :
- une carte à circuits (22) sur laquelle sont prévus une pluralité de contacts stationnaires (24a, 24b, 24c, 24d) ;
- une nappe de commutateur élastique (26) avec une pluralité égale de contacts mobiles, lesquels sont placés au-dessus des contacts stationnaires (24a, 24b, 24c, 24d);
- une touche basculante (12) montée au moins indirectement sur la carte à circuits (22), laquelle peut être basculée autour de plusieurs axes de basculement (A, B) qui se croisent, grâce à quoi un contact mobile peut venir en contact avec un contact stationnaire (24a, 24b, 24c, 24d) qui lui est associé ;
- le commutateur basculant à plusieurs voies (10) comprend en outre une plaque de charnière (20) avec plusieurs axes de charnière (a1, a2, b1, b2) qui se croisent et s'étendent parallèlement aux axes de basculement (A, B) de la touche basculante (12), autour desquels la plaque de charnière (20) se déforme lors d'un basculement de la touche basculante (12) pour transmettre le mouvement de basculement de la touche basculante (12) vers les contacts mobiles (24a, 24b, 24c, 24d),
**caractérisé en ce que,** lors d'un basculement de la touche basculante (12) autour d'un premier axe de basculement (A, B), la plaque de charnière (20) se déforme autour d'un premier axe de charnière associée (a1, a2, b1, b2) de telle manière qu'elle bloque un basculement simultané de la touche basculante (12) autour d'un second axe de basculement (B, A) qui croise le premier axe de basculement (A, B).

2. Commutateur basculant à plusieurs voies selon la revendication 1,
**caractérisé en ce que** les axes de charnière (a1, a2, b1, b2) sont mutuellement subdivisés en plusieurs tronçons d'axes de charnière, de sorte que lors du basculement de la touche basculante (12) autour du premier axe de basculement (A, B), la plaque de charnière (20) se déforme autour du premier axe de charnière associé (a1, a2, b1, b2) de telle manière que les tronçons d'axes de charnière des axes de charnière (b1, b2, a1, a2) qui croisent les premiers axes de charnière (a1, a2, b1, b2) définissent un angle.

3. Commutateur basculant à plusieurs voies selon la revendication 1 ou 2,
**caractérisé en ce que** le commutateur basculant à plusieurs voies (10) est réalisé sous forme de commutateur basculant à quatre voies, dans lequel :
- la carte à circuits (22) comprend quatre contacts stationnaires (24a, 24b, 24c, 24d) agencés en forme de losange ;
- les contacts mobiles de la nappe de commutation (26) sont également agencés en forme de losange ;
- la touche basculante (12) est capable de basculer autour de deux axes de basculement (A, B) perpendiculaires l'un à l'autre ; et
- la plaque de charnière (20) comporte au moins deux axes de charnière (a1, a2, b1, b2) perpendiculaires l'un à l'autre.

4. Commutateur basculant à plusieurs voies selon l'une au moins des revendications excellentes,
**caractérisé en ce que** la plaque de charnière (20) comporte quatre axes de charnière (a1, a2, b1, b2) qui sont orientés de telle façon que la plaque de charnière (20) est subdivisée en neuf zones.

5. Commutateur basculant à plusieurs voies selon l'une au moins des revendications précédentes,
**caractérisé en ce que** la plaque de charnière (20) comporte deux paires d'axes de charnière parallèles (a1, a2, b1, b2), telles qu'une paire (a1, a2, b1, b2) croise perpendiculairement l'autre paire (b1, b2, a1, a2).

6. Commutateur basculant à plusieurs voies selon l'une au moins des revendications précédentes,
**caractérisé en ce que** la plaque de charnière (20) est fabriquée en matière plastique et les axes de charnière (a1, a2, b1, b2) son formés par des charnières à film.

7. Commutateur basculant à plusieurs voies selon l'une au moins des revendications précédentes,
**caractérisé en ce que** la plaque de charnière (20) est fabriquée en un métal durablement élastique, en particulier en acier à ressort, dans lequel les axes de charnière (a1, a2, b1, b2) sont gravés.

8. Commutateur basculant à plusieurs voies selon l'une au moins des revendications précédentes,
**caractérisé en ce que** le commutateur basculant à plusieurs voies (10) comprend en outre un corps de maintien (14, 16) fixé sur la carte à circuits (22), qui reçoit la plaque de charnière (20) et sur lequel la touche basculante (12) est montée via une articulation à rotule (36).

9. Commutateur basculant à plusieurs voies selon la revendication 8,
**caractérisé en ce que** le corps de maintien (14, 16) et la touche basculante (12) comprennent des tronçons d'engagement (46, 48) qui sont en engagement mutuel afin de s'opposer à une rotation de la touche basculante (12).

10. Commutateur basculant à plusieurs voies selon la revendication 8 ou 9,
**caractérisé en ce que** le corps de maintien (14, 16) est composé d'une partie supérieure (14) et d'une partie inférieure (16), entre lesquelles la plaque de charnière (20) est agencée.

11. Commutateur basculant à plusieurs voies selon l'une au moins des revendications 8 à 10,
**caractérisé en ce que** le corps de maintien (14, 16) comprend une pluralité de guidages (38a, 38b, 38c, 38b), en particulier quatre guidages (38a, 38b, 38c, 38b), qui reçoivent chacun un élément de transmission (18a, 18b, 18c, 18b) en coulissement, via lequel une déformation de la plaque de charnière (20) provoquée par un basculement de la touche basculante (12), est transmise à un contact mobile associé.

12. Commutateur basculant à plusieurs voies selon la revendication 11,
**caractérisé en ce que** les éléments de transmission (18a, 18b, 18c, 18b) présentent Des traversées qui sont alignées avec des traversées (34a, 34b, 34c, 34b) dans le corps de maintien (14, 16) et dans la plaque de charnière (20) pour permettre un rétroéclairage de la touche basculante (12) au moyen d'une source de lumière agencée sur la carte à circuits (22).

13. Commutateur basculant à plusieurs voies selon la revendication 11 ou 12,
**caractérisé en ce que** les éléments de transmission (18a, 18b, 18c, 18b) sont reliés les uns aux autres via des bras de ressorts élastiques (40a, 40b, 40c, 40d) qui sont de préférence enroulés en forme de spirale.
